# EUROPÄISCHE PATENTSCHRIFT

(11) **EP 4 239 307 B1**
(45) Veröffentlichungstag und Bekanntmachung des Hinweises auf die Patenterteilung: **04.02.2026**
(21) Anmeldenummer: 23158434.3
(22) Anmeldetag: 24.02.2023
(51) Int. Cl.: G01M 5/00

(54) **VERFAHREN UND TESTVORRICHTUNG ZUM ZEITGLEICHEN TESTEN VON ZWEI ROTORBLÄTTERN UND/ODER ZWEI ROTORBLATTSEGMENTEN FÜR EINE WINDENERGIEANLAGE**
METHOD AND TEST DEVICE FOR SIMULTANEOUSLY TESTING TWO ROTOR BLADES AND/OR TWO ROTOR BLADE SEGMENTS FOR A WIND TURBINE
PROCÉDÉ ET DISPOSITIF DE TEST POUR TESTER SIMULTANÉMENT DEUX PALES DE ROTOR ET/OU DEUX SEGMENTS DE PALE DE ROTOR POUR UNE ÉOLIENNE

(30) Priorität: 01.03.2022 DE 102022104846
(43) Veröffentlichungstag der Anmeldung: 06.09.2023
(73) Patentinhaber: Wobben Properties GmbH, 26607 Aurich (DE)
(72) Erfinder: Troyke, Alexander, 10439 Berlin (DE); Bürkner, Falko, 28757 Bremen (DE)
(74) Vertreter: Eisenführ Speiser

(56) Entgegenhaltungen:
- EP-B1- 3 296 715
- DE-C- 654 009
- US-A1- 2020 132 052
- US-B2- 8 578 753

## Beschreibung

Die Erfindung betrifft eine Testvorrichtung zum zeitgleichen Testen von zwei Rotorblättern und/oder zwei Rotorblattsegmenten für eine Windenergieanlage, ein Verfahren zum zeitgleichen Testen von zwei Rotorblättern und/oder zwei Rotorblattsegmenten für eine Windenergieanlage, ein Verfahren zum Testen eines Rotorblatts und/oder eines Rotorblattsegments für eine Windenergieanlage sowie die Verwendung einer Testvorrichtung zum Testen eines Rotorblatts und/oder eines Rotorblattsegments für eine Windenergieanlage und/oder zum zeitgleichen Testen von zwei Rotorblättern und/oder zwei Rotorblattsegmenten für eine Windenergieanlage.

Der Trend zu immer größeren Windenergieanlagen mit steigender Nennleistung führt auch zu immer größeren bzw. längeren Rotorblättern. Mit zunehmender Größe bzw. Länge sind die Rotorblätter größerer Windenergieanlagen auch größeren statischen und dynamischen Belastungen ausgesetzt.

Bei der Entwicklung von Rotorblättern für Windenergieanlagen sind neben der Modellierung der Rotorblätter häufig auch Tests erforderlich, die sowohl Tests mit statischen (Extrem-)Lasten als auch mit zyklischen oder dynamischen Ermüdungslasten umfassen. Dabei werden die Rotorblätter in der Regel an Testständen getestet, um festzustellen, ob ihre Ermüdungsfestigkeit und/oder ihre sonstigen Eigenschaften für die vorgesehene Lebensdauer ausreichen. Die Prüfung von Rotorblättern dient insbesondere auch dazu, zu überprüfen, ob die im Blatt verwendeten Materialien und deren Verbindung sicher, zuverlässig und tragfähig sind (z. B. ob sich die zur Herstellung eines Blattes verwendeten (Faser-)Schichten nicht trennen (d. h. keine Delamination auftritt) oder ob die Holmgurte ausreichend tragfähig sind) und/oder ob das Blatt bei wiederholter und/oder extremer Belastung nicht bricht.

Diese Tests, die vor dem Einsatz und insbesondere vor einer Serienreife von Rotorblättern durchgeführt werden, können die Umsetzung einer neuen Rotorblattkonstruktion erheblich verzögern und verteuern. Eine weitere Herausforderung ist, dass auch die Testausrüstung teuer in der Anschaffung und im Betrieb ist, was ebenfalls die Kosten für Rotorblätter und Windenergieanlagen erhöht. Insbesondere sind derzeit verfügbare Prüfstände nicht für Tests von Rotorblättern mit einer Länge von über 70 m, über 80 m, über 90 m oder über 100 m geeignet. Ein Ausbau derzeitiger Prüfstände zum Testen von Rotorblättern mit einer Länge von über 70 m, über 80 m, über 90 m oder über 100 m würde - sofern überhaupt realisierbar - zu extrem hohen Investitionskosten führen, die die Wirtschaftlichkeit der Umsetzung in Frage stellen. Die US 8,677,827 B2 beschreibt Mehrachsen-Freiheitsgrad-Blattprüfsysteme, die eine Anregung der Basis nutzen, um eine effizientere Ermüdungsprüfung von Windturbinenblättern zu ermöglichen. Allerdings sind weitere Verbesserungen wünschenswert.

Das Deutsche Patent- und Markenamt hat in der Prioritätsanmeldung zu vorliegender Anmeldung folgenden Stand der Technik recherchiert: DE 10 2016 117 647 A1, DE 10 2018 218 515 A1, US 8 677 827 B2.

Das Europäische Patentamt hat zu vorliegender Anmeldung folgenden Stand der Technik recherchiert: US 2020/132052 A1, US 8 578 753 B2, EP 3 296 715 B1 und DE 654 009 C. Im Besonderen offenbart EP 3 296 715 B1 eine Vorrichtung und ein Verfahren zur Gewinnung von Daten zu einem Rotorblatt für eine Windenergieanlage.

Es ist daher eine Aufgabe der vorliegenden Erfindung, bestehende Nachteile zu verringern oder zu beseitigen und/oder eine verbesserte Lösung und/oder eine Lösung für einen breiteren Anwendungsbereich, insbesondere für Rotorblätter mit einer Länge von über 70 m, über 80 m, über 90 m oder über 100 m bereitzustellen. Es ist insbesondere eine Aufgabe der vorliegenden Erfindung, eine verbesserte Testvorrichtung zum zeitgleichen Testen von zwei Rotorblättern und/oder zwei Rotorblattsegmenten für eine Windenergieanlage, ein verbessertes Verfahren zum zeitgleichen Testen von zwei Rotorblättern und/oder zwei Rotorblattsegmenten für eine Windenergieanlage, ein verbessertes Verfahren zum Testen eines Rotorblatts und/oder eines Rotorblattsegments für eine Windenergieanlage sowie die Verwendung einer Testvorrichtung zum Testen eines Rotorblatts und/oder eines Rotorblattsegments für eine Windenergieanlage und/oder zum zeitgleichen Testen von zwei Rotorblättern und/oder zwei Rotorblattsegmenten für eine Windenergieanlage bereitzustellen.

Diese Aufgabe wird erfindungsgemäß gelöst durch eine Testvorrichtung zum zeitgleichen Testen von zwei Rotorblättern und/oder zwei Rotorblattsegmenten für eine Windenergieanlage, umfassend ein erstes Adapterelement zur Befestigung eines ersten Rotorblatts oder Rotorblattsegments daran, ein zweites Adapterelement zur Befestigung eines zweiten Rotorblatts oder Rotorblattsegments daran, eine Tragkonstruktion, an der das erste und zweite Adapterelement befestigt sind, eine Anregungsvorrichtung, die ausgebildet ist, eine statische und/oder zyklische Belastung auf das erste und/oder zweite Rotorblatt oder Rotorblattsegment aufzubringen, wobei das erste und das zweite Adapterelement miteinander verbunden sind.

Wie noch beschrieben wird, ist die Tragkonstruktion vorzugsweise auf einem Fundament, das auch als Testplattform bezeichnet werden kann, angeordnet.

Die beiden Rotorblätter und/oder Rotorblattsegmente werden an zwei Adapterelementen befestigt, die wiederum gegeneinander und mit der Tragkonstruktion, insbesondere gelenkig, verbunden sind. Diese Testvorrichtung ermöglicht es somit, zwei Rotorblätter und/oder Rotorblattsegmente aneinander zu befestigen, insbesondere über eine Verbindung von deren Flanschen mit den Adapterelementen und der Verbindung der Adapterelemente miteinander, und gemeinsam zu testen. Die hier beschriebene Anordnung kann auch als "Rücken-an-Rücken-Anordnung" von zwei Rotorblättern (insbesondere in einer Reihe) bezeichnet werden.

Im Testbetrieb liegt durch die Anordnung der beiden Rotorblätter und/oder Rotorblattsegmente gegeneinander und deren Befestigung aneinander daher der Großteil der in der Tragkonstruktion und/oder im Fundament auftretenden Belastungen nur noch in Form von Vertikalkräften und/oder Horizontalkräften vor und nicht mehr in Form von Biegemomenten.

Dabei können die Rotorblätter sowohl auf Ermüdung mit einer, vorzugsweise synchronen, Eigenfrequenzschwingung als auch mit quasi-statischen Extremlasten getestet werden.

Mit der hier beschriebenen Lösung sind ferner sowohl Innenprüfungen (z.B. in einer Halle) und Außenprüfungen (z.B. unter freiem Himmel) möglich. Ferner sind Mischformen möglich, bei denen nur ein Teil des Testaufbaus, z.B. die Testvorrichtung, ganz oder teilweise abgedeckt und/oder gegen Witterungseinflüsse geschützt ist.

Beim Testen der hier vorliegenden Rotorblätter mit einer Länge von über 70 m, über 80 m, über 90 m oder über 100 m können ganze Rotorblätter getestet werden oder aber Rotorblattsegmente, wobei ein Rotorblattsegment vorzugsweise einen Bereich von 30% bis 99%, vorzugsweise einen Bereich von mindestens 60% oder mindestens 80%, der Gesamtlänge des Rotorblatts umfasst, insbesondere von der Blattwurzel an. Das Testen von Rotorblattsegmenten hat den Vorteil, die Dimensionen des Gesamtprüfaufbaus sowie die Durchbiegungen des Rotorblattsegments (insbesondere an der Spitze) zu reduzieren, was zu einer geringeren erforderlichen Hallenhöhe (sofern der Test nicht draußen durchgeführt wird) und zu einer geringeren erforderlichen Anregungsenergie führt, da die Luftdämpfung viel geringer ist, und somit auch weniger teure Anregungsvorrichtungen zum Einsatz kommen können.

Wenn im Folgenden von einem Rotorblatt oder Rotorblättern die Rede ist, gilt das gleiche entsprechend auch für ein Rotorblattsegment oder Rotorblattsegmente.

Als Längsachse eines Rotorblatts und/oder eines Rotorblattsegments wird hier die Blattachse verstanden, die in einer Richtung orthogonal zur Blattflanschebene durch den Mittelpunkt des ringförmigen Blattflansches verläuft.

Durch die Verbindung der Rotorblätter miteinander können die beim Test, insbesondere beim Ermüdungstest, auftretenden Biegemomente zwischen den beiden Rotorblättern, insbesondere an deren Flanschende, größtenteils aufgehoben bzw. ,kurzgeschlossen' werden und müssen nicht mehr über die Tragkonstruktion abgeleitet werden. Dies ermöglicht eine größtenteils momentenfreie Lagerung der Tragkonstruktion, da im Wesentlichen nur noch Vertikalkräfte und/oder Horizontalkräfte übertragen werden müssen, und die auftretenden, zu übertragenden und in ein Fundament einzuleitenden Biegemomente auf ein Minimum oder zumindest signifikant reduziert werden. Auf diese Weise ist eine Reduktion der für den Teststand benötigten Test-Hardware und des erforderlichen Fundaments auf ein Minimum möglich, was ebenfalls deutlich geringere Investitionskosten bedeutet.

Die hier beschriebene Lösung ermöglicht somit eine Testvorrichtung, die deutlich kostengünstiger umzusetzen ist und daher deutlich geringere Investitionskosten bedeutet. So betragen die Investitionskosten für eine hier beschriebene Testvorrichtung nur etwa 10-20% und die Zeit von der Planung bis zur Inbetriebnahme nur etwa 50% der Investitionskosten und erforderlichen Zeit bei auf konventionellen Testverfahren beruhenden Testvorrichtungen.

Die Erfindung beruht unter anderem auf der Erkenntnis, dass der bisherige Testaufbau mit der Befestigung eines Rotorblatts mit dem Blattflansch an einer steifen Stahl- oder (Stahl)Betonstruktur immer eine Belastung des Teststands mit den vollen Flanschbiegemomenten bedeutete. Die Ableitung dieser Biegemomente über die Tragkonstruktion in das Fundament in Kombination mit einer zyklischen Ermüdungsbelastung erfordert eine sehr massive Konstruktion mit hohen Investitionskosten (teilweise mit Baukosten pro Prüfstand zwischen 15-20 Mio. €) und langer Bauzeit.

Die Testvorrichtung ist vorzugsweise ausgebildet, Rotorblätter und/oder Rotorblattsegmente in verschiedenen Richtungen zu testen, insbesondere in Schlagrichtung (Verformung/Belastung in Windrichtung bei Anlagenbetrieb, auch als "flap-wise" bezeichnet) und/oder in Schwenkrichtung (Verformung/Belastung in Rotorebene (der Windenergieanlage), auch als "lead-lag-wise" bezeichnet) und/oder "edge-wise" und/oder "flat-wise" (dies sind die lokalen (auf den Radius des Rotorblattes) bezogenen Richtungen entsprechend des aerodynamischen Systems bezogenen Achsen: edge-wise ist die Sehnen- ("cord") Richtung des jeweiligen Profils, flat-wise 90° dazu) bezeichnet. Vorzugsweise ist die Testvorrichtung ausgebildet für Tests im ersten und/oder zweiten Eigenmode des Rotorblatts bzw. Rotorblattsegments oder der Rotorblätter bzw. der Rotorblattsegmente, vorzugsweise jeweils inkl. von mitschwingenden Komponenten, wie z.B. der Lastsattel, was vorzugsweise der (vorzugsweise eingesetzten) Testrichtungen "Schlag- und Schwenkrichtung" entspricht. Vorzugsweise werden diese Tests, z.B. als zwei einachsige Tests, nacheinander durchgeführt. Um die typische Lebensdauer eines Rotorblattes zu simulieren, kann ein Ermüdungstest beispielsweise eine Million bis zehn Millionen oder mehr Last- oder Ermüdungszyklen beinhalten, die für jede getestete Richtung drei bis zwölf Monate oder länger dauern können. Vorzugsweise ist die Testvorrichtung ausgebildet für kombinierte (zeitgleiche) Tests von Schlag-und Schwenkrichtung.

Die auf das Rotorblatt in einer bestimmten Richtung ausgeübte Last kann zeitinvariant oder statisch sein. Statische Belastungen sind vorteilhaft, um die Steifigkeit und Bruchfestigkeit des Rotorblatts zu bewerten. Alternativ kann die Belastung zeitlich variieren; in diesem Fall kann die Belastung als "zyklisch" bezeichnet werden. Zyklische Belastungen sind vorteilhaft, um die Ermüdungsfestigkeit des Rotorblatts zu bewerten.

Die über die Anregungsvorrichtung aufgebrachten Lasten werden in der Regel in einer ersten und einer zweiten Richtung und mit einer ersten und einer zweiten Frequenz aufgebracht, z. B. mit unterschiedlichen Frequenzen, die den Resonanzfrequenzen bzw. Eigenfrequenzen des Prüfgegenstandes entsprechen können oder nicht. Die erste Richtung und die zweite Richtung verlaufen vorzugsweise quer zueinander und können vorzugsweise orthogonal sein.

Gerade bei der Anregung des Blattes in seiner ersten oder zweiten Eigenfrequenz, um eine Ermüdungsbelastung aufzubringen, werden die zyklischen Flanschmomente von sehr langen Blättern extrem hoch, wodurch eine sehr massive und damit teure Haltekonstruktion des Rotorblattes notwendig wird, und wie erwähnt, zu außerordentlich hohen Investitionskosten führt. Diesbezüglich weist die hier beschriebene Testvorrichtung deutliche Vorteile auf.

Im Vergleich mit existierenden Lösungen übersteigt in der hier beschriebenen Lösung vorzugsweise die abhebende Querkraft an den Rotorblattflanschen auch die Eigengewichtskraft der Tragkonstruktion nicht oder nur geringfügig, so dass ein Abheben nicht zu erwarten ist bzw. durch leichtes Ballastieren verhindert werden kann.

Gemäß einer bevorzugten Ausführungsform ist vorgesehen, dass das erste und zweite Adapterelement um eine gemeinsame Drehachse drehbar an der Tragkonstruktion befestigt sind. Vorzugsweise ist die gemeinsame Drehachse, insbesondere im Testbetrieb, im Wesentlichen orthogonal zu Längsachsen von im Testbetrieb an dem ersten und/oder zweiten Adapterelement befestigten Rotorblättern und/oder Rotorblattsegmenten ausgerichtet.

Beispielsweise kann die gemeinsame Drehachse, insbesondere im Testbetrieb, horizontal oder vertikal ausgerichtet sein. Ferner vorzugsweise kann die gemeinsame Drehachse verstellbar, insbesondere zwischen einer, insbesondere im Testbetrieb, horizontalen Position und einer, insbesondere im Testbetrieb, vertikalen Position verstellbar, ausgebildet sein.

Dies ist insbesondere bevorzugt, um Tests in unterschiedlichen Richtungen durchführen zu können.

Es ist ferner bevorzugt, dass die Tragkonstruktion ausgebildet ist, Querkräfte, insbesondere vertikale Kräfte und/oder horizontale Kräfte, und Biegemomente aufzunehmen, wobei das Verhältnis der von der Tragkonstruktion aufnehmbaren Biegemomente in kNm zu den von der Tragkonstruktion aufnehmbaren Querkräften in kN vorzugsweise maximal 15 beträgt, insbesondere maximal 10, maximal 5, oder maximal 3,5.

Gemäß einer bevorzugten Ausführungsform ist vorgesehen, dass die Testvorrichtung ein Fundament umfasst, wobei das Fundament ausgebildet ist, Querkräfte, insbesondere vertikale Kräfte und/oder horizontale Kräfte, und Biegemomente aufzunehmen, wobei das Verhältnis der von der Tragkonstruktion aufnehmbaren Biegemomente in kNm zu den von der Tragkonstruktion aufnehmbaren Querkräften in kN vorzugsweise maximal 15 beträgt, insbesondere maximal 10, maximal 5, oder maximal 3,5.

Ferner ist bevorzugt, dass die Anbindung zwischen Tragkonstruktion und Fundament ausgebildet ist, Querkräfte, insbesondere vertikale Kräfte und/oder horizontale Kräfte, und Biegemomente aufzunehmen, wobei das Verhältnis der von der Tragkonstruktion aufnehmbaren Biegemomente in kNm zu den von der Tragkonstruktion aufnehmbaren Querkräften in kN vorzugsweise maximal 15 beträgt, insbesondere maximal 10, maximal 5, oder maximal 3,5.

Die hier beschriebene Testvorrichtung wird hauptsächlich mit Querkräften belastet, wohingegen die aufzunehmenden Biegemomente gegenüber existierenden Lösungen stark reduziert sind, auf etwa maximal 10% der in existierenden Lösungen auftretenden Biegemomente. Die mit der beschriebenen Testvorrichtung aufzunehmenden Querkräfte verdoppeln sich hingegen etwa gegenüber existierenden Lösungen. Die Aufnahme von Querkräften ist jedoch sowohl für die Tragkonstruktion, noch für das Fundament oder die Anbindung zwischen Tragkonstruktion und Fundament einfach umsetzbar.

### Belas tung der Tragstruktur bel zyklischen (Ermüdungs-)Tests (Schnittgrößen als Schwingweite angegeben) mit der erfindungsgemäßen Lösung:

| Blattlänge [m] | Biegemoment [kNm] | Querkräfte [kN] | Verhältnis Biegemoment [kNm] / Querkraft [kN] |
|---|---|---|---|
| 35 | 500,0 | 300,0 | 1,7 |
| 70 | 1.500,0 | 600,0 | 2,5 |
| 100 | 3.000,0 | 1.000,0 | 3,0 |
| 120 | 5.000,0 | 1.600,0 | 3,1 |

### Belas tung der Tragstruktur bei statischen (Extremlosten-)Tests mit der erfindungsgemäßen Lösung:

| Blattlänge [m] | Biege moment [kNm] | Querkräfte [kN] | Verhältnis Biege moment [kNm] / Querkraft [kN] |
|---|---|---|---|
| 35 | 500,0 | 500,0 | 1,0 |
| 70 | 1.700,0 | 1.000,0 | 1,7 |
| 100 | 4.500,0 | 1.800,0 | 2,5 |
| 120 | 7.000,0 | 2.400,0 | 2,9 |

### Belas tung der Tragstruktur bei zyklischen (Ermüdungs-)Tests (Schnktgrößen als Schwingweite angegeben) im Stand der Technik:

| Blattlange [m] | Biegemoment [kNm] | Querkräfte [kN] | Verhältnis Biegemoment [kNm] / Querkraft [kN] |
|---|---|---|---|
| 35 | 5.000,0 | 150,0 | 33,3 |
| 70 | 15.000,0 | 300,0 | 50,0 |
| 100 | 30.000,0 | 500,0 | 60,0 |
| 120 | 50.000,0 | 800,0 | 62,5 |

### Belas tung der Tragstruktur bei statischen (Extremlas ten-)Tests im Stand der Technik:

| Blattlänge [m] | Biege moment [kNm] | Querkräfte [kN] | Verhältnis Biege moment [kNm] / Querkraft [kN] |
|---|---|---|---|
| 35 | 5 000,0 | 250,0 | 20,0 |
| 70 | 17.000,0 | 500,0 | 34,0 |
| 100 | 45.000,0 | 900,0 | 50,0 |
| 120 | 70.000,0 | 1.200,0 | 58,3 |

In einer bevorzugten Ausführungsform ist vorgesehen, dass das erste und das zweite Adapterelement zueinander einen Winkel von 0° bis 40°, insbesondere von 0° bis 10°, einschließen. Eine bevorzugte Weiterbildung zeichnet sich dadurch aus, dass das erste Adapterelement zur Vertikalen einen Winkel von 0° bis 20°, insbesondere von 0° bis 5°, einschließt, und/oder das zweite Adapterelement zur Vertikalen einen Winkel von 0° bis 20°, insbesondere von 0° bis 5°, einschließt.

Gemäß einer bevorzugten Ausführungsform ist vorgesehen, dass die Längsachse des ersten Rotorblatts oder Rotorblattsegments und die Längsachse des zweiten Rotorblatts oder Rotorblattsegments zueinander einen Winkel von 180° bis 140°, insbesondere von 180° bis 170°, einschließen. Ferner ist bevorzugt, dass die Längsachse des ersten Rotorblatts oder Rotorblattsegments zur Horizontalen einen Winkel von 0° bis 20°, insbesondere von 0° bis 5°, einschließt, und/oder die Längsachse des zweiten Rotorblatts oder Rotorblattsegments zur Horizontalen einen Winkel von 0° bis 20°, insbesondere von 0° bis 5°, einschließt.

Ferner ist vorzugsweise vorgesehen, dass das erste Adapterelement als Adapterplatte ausgebildet ist und/oder dass das zweite Adapterelement als Adapterplatte ausgebildet ist. Plattenförmige Adapterelemente können gut sowohl mit den Rotorblattflanschen als auch miteinander und mit der Tragkonstruktion verbunden werden.

Vorzugsweise sind das erste Adapterelement und das zweite Adapterelement direkt mit Spannankern miteinander und mit der Tragkonstruktion verbunden. Dies ermöglicht eine besonders einfache Lösung mit entsprechenden Vorteilen hinsichtlich der Kosten.

Ferner sind vorzugsweise zwischen dem ersten und dem zweiten Adapterelement ein, zwei oder mehrere Abstandshalter angeordnet. Der oder die Abstandshalter ist bzw. sind beispielsweise als rohrförmige Abstandshalter ausgebildet und/oder ausgebildet zur Aufnahme von hohen Druckkräften.

Gemäß einer bevorzugten Ausführungsform ist vorgesehen, dass die Testvorrichtung demontierbar und/oder transportabel ausgebildet ist. Die Testvorrichtung kann daher auch als mobil bezeichnet werden.

Die hier beschriebene Lösung mit ihren im Vergleich zu existierenden Lösungen relativ kleinen und/oder leichten Komponenten ermöglicht diese Ausgestaltung der Demontierbarkeit, Transportabilität oder Mobilität. Dies wird möglich, da die Testvorrichtung aufgrund ihres geringeren Gewichts zwischen den Prüfstandorten transportiert werden kann und auch nur ein vergleichsweise einfaches Fundament erforderlich ist, das vor Ort entweder schon vorhanden ist (als ebener, tragfähiger Untergrund) oder vor Ort einfach und schnell bereitgestellt werden kann.

Diese demontierbare und/oder transportable Ausgestaltung hat den Vorteil, dass die Testvorrichtung zu einer Produktionsstätte transportiert werden kann, anstatt die großen Rotorblätter und/oder Rotorblattsegmente, oft noch im Stadium eines Prototyps über weite Strecken zu transportieren, was aufwändig und teuer ist. Ferner können die Rotorblätter und/oder Rotorblattsegmente beim Transport beschädigt werden, was zu entsprechend schlechteren Testergebnissen und damit ggf. eine Zertifizierung in Frage stellt bzw. einen neuen Test (mit dem entsprechend hohen Zeit- und Kostenaufwand) erforderlich macht. Die aufwändigen Rotorblatttransporte von der Fertigung zum Prüfstand könnten entfallen, wenn das Blatt direkt bei der Fertigung getestet werden kann. Da die Zertifizierung der Rotorblätter sehr zeitkritisch für die Entwicklung neuer Anlagen ist, sind solche lange Transportzeiten nachteilig. Ein großer Vorteil der hier beschriebenen Lösung ist daher die Möglichkeit, Rotorblätter direkt in der unmittelbaren Nähe des Produktionsortes zu testen und damit Zeit und Kosten für den Transport einzusparen.

Vorzugsweise sind mehrere Bestandteile der Testvorrichtung, insbesondere alle Bestandteile der Testvorrichtung außer dem Fundament, zusammen transportabel, beispielsweise in einem Standardcontainer, insbesondere einem ISO-Container (z.B. einem 40-Fuß-ISO-Container) und/oder auf einem LKW, insbesondere einem LKW bis 40t, und/oder auf einem Sattelauflieger, insbesondere einem Sattelauflieger mit maximalen Außenmaßen von 13,68 m × 2,55 m × 4,00 m.

Die Anregungsvorrichtung ist vorzugsweise ausgebildet, beide Rotorblätter und/oder beide Rotorblattsegmente gleichzeitig und/oder gleich anzuregen. Dies kann vorteilhaft sein, z.B. um mehr Möglichkeiten zur Anpassung der Belastung zu haben, etwa bei einem Zertifizierungstest.

Ebenso ist die Anregungsvorrichtung vorzugsweise ausgebildet, eines der beiden Rotorblätter und/oder eines der beiden Rotorblattsegmente anzuregen. Die Anregung eines der beiden Rotorblätter und/oder beider Rotorblattsegmente und/oder eines der beiden Rotorblattsegmente kann ausreichen, um beide Rotorblätter und/oder beide Rotorblattsegmente in Schwingung zu versetzen. Auch wenn nur eines der beiden Rotorblätter und/oder eines der beiden Rotorblattsegmente angeregt wird, kann es bevorzugt sein, dass die Anregungsvorrichtung (bzw. deren Komponenten) mit jedem der beiden Rotorblätter und/oder jedem der beiden Rotorblattsegmente verbunden ist, um die Eigenfrequenzen beider Rotorblätter und/oder beider Rotorblattsegmente so ähnlich wie möglich einzustellen.

Wie noch weiter beschrieben wird, kann die Testvorrichtung auch genutzt werden, um lediglich ein Rotorblatt und/oder ein Rotorblattsegment zu testen. In diesem Fall kann es vorteilhaft sein, wenn an dem zweiten Adapterelement ein Gegenelement angeordnet ist.

Die Anregungsvorrichtung kann vorzugsweise eine Steuerungsvorrichtung aufweisen oder mit einer Steuerungsvorrichtung verbunden sein, wobei vorzugsweise die Steuerungsvorrichtung ausgebildet ist, die Anregung des Rotorblatts und/oder des Rotorblattsegments und/oder der Rotorblätter und/oder der Rotorblattsegmente zu steuern. Vorzugsweise weist die Steuerungsvorrichtung einen Abschaltmechanismus auf, der ausgebildet ist, die Anregung zu verändern und/oder zu beenden, insbesondere wenn ein kritischer Zustand überschritten wird, beispielsweise wenn ein Grenzwert hinsichtlich der Durchbiegungen der Rotorblätter und/oder der Rotorblattsegmente, erreicht bzw. überschritten wird, oder wenn ein Fehler in der Steuerung auftritt.

In einer weiteren bevorzugten Ausführungsform ist vorgesehen, dass die Anregungsvorrichtung einen oder mehrere Aktuatoren umfasst. Die Aktuatoren können hydraulisch, beispielsweise in Form von Hydraulikzylindern, und/oder pneumatisch und/oder elektrisch ausgebildet sein. Wenn hier Details am Beispiel einer hydraulischen Anregung erläutert werden, gelten diese, sofern nicht anders angegeben, ebenso auch für eine pneumatische und/oder elektrische Anregung.

Ferner vorzugsweise ist die Anregungsvorrichtung ausgebildet, das erste und das zweite Rotorblatt oder Rotorblattsegment gleich anzuregen, insbesondere synchron und/oder mit der gleichen Frequenz, vorzugsweise mit der ersten oder zweiten Eigenfrequenz des ersten und zweiten Rotorblatts oder Rotorblattsegments. Hierfür sind vorzugsweise mindestens zwei Aktuatoren, insbesondere in Form von hydraulischen und/oder pneumatischen und/oder elektrischen Stellantrieben, vorgesehen, und vorzugsweise ferner mindestens zwei Regler, die beispielsweise in der Steuerungsvorrichtung und/oder in den Aktuatoren integriert sein können.

Gemäß einem weiteren Aspekt der Erfindung wird die eingangs genannte Aufgabe gelöst durch ein Verfahren zum zeitgleichen Testen von zwei Rotorblättern und/oder zwei Rotorblattsegmenten für eine Windenergieanlage, umfassend: Befestigen eines ersten Rotorblatts oder Rotorblattsegments an einem ersten Adapterelement, Befestigen eines zweiten Rotorblatts oder Rotorblattsegments an einem zweiten Adapterelement, Verbinden der ersten und zweiten Adapterelemente miteinander, Anordnen des ersten und zweiten Adapterelements an einer Tragkonstruktion, Aufbringen einer statischen und/oder zyklischen Belastung durch eine Anregungsvorrichtung auf das erste und/oder zweite Rotorblatt oder Rotorblattsegment.

Das Verfahren zum zeitgleichen Testen von zwei Rotorblättern und/oder zwei Rotorblattsegmenten für eine Windenergieanlage umfasst das Bereitstellen einer zuvor beschriebenen Testvorrichtung.

Das Verfahren zum zeitgleichen Testen von zwei Rotorblättern und/oder zwei Rotorblattsegmenten für eine Windenergieanlage ist vorzugsweise dadurch fortgebildet, dass das erste und/oder das zweite Rotorblattsegment einen Bereich von 30% bis 99%, vorzugsweise einen Bereich von mindestens 60% oder mindestens 80%, der Gesamtlänge des Rotorblatts umfasst, insbesondere von der Blattwurzel an.

Das Verfahren zum zeitgleichen Testen von zwei Rotorblättern und/oder zwei Rotorblattsegmenten für eine Windenergieanlage ist vorzugsweise dadurch fortgebildet, dass das erste und das zweite Rotorblatt oder Rotorblattsegment im Wesentlichen gleich ausgebildet sind.

Das Verfahren zum zeitgleichen Testen von zwei Rotorblättern und/oder zwei Rotorblattsegmenten für eine Windenergieanlage ist vorzugsweise gekennzeichnet durch synchrones Aufbringen einer zyklischen Belastung auf das erste und das zweite Rotorblatt oder Rotorblattsegment.

Gemäß einem weiteren Aspekt der Erfindung wird die eingangs genannte Aufgabe gelöst durch ein Verfahren zum Testen eines Rotorblatts und/oder eines Rotorblattsegments für eine Windenergieanlage, umfassend: Bereitstellen einer zuvor beschriebenen Testvorrichtung, Befestigen eines ersten Rotorblatts oder Rotorblattsegments an dem ersten Adapterelement, Anordnen des ersten Adapterelements an einer Tragkonstruktion, Aufbringen einer statischen und/oder zyklischen Belastung durch eine Anregungsvorrichtung auf das erste zweite Rotorblatt oder Rotorblattsegment.

Das Verfahren zum Testen eines Rotorblatts und/oder eines Rotorblattsegments für eine Windenergieanlage umfasst das Bereitstellen einer zuvor beschriebenen Testvorrichtung.

Das Verfahren zum Testen eines Rotorblatts und/oder eines Rotorblattsegments für eine Windenergieanlage ist vorzugsweise dadurch fortgebildet, dass das erste Rotorblattsegment einen Bereich von 30% bis 99%, vorzugsweise einen Bereich von mindestens 60% oder mindestens 80%, der Gesamtlänge des Rotorblatts umfasst, insbesondere von der Blattwurzel an.

Das Verfahren zum Testen eines Rotorblatts und/oder eines Rotorblattsegments für eine Windenergieanlage umfasst ferner vorzugsweise das Anordnen eines Gegenelements, das auch als Gegenschwingelement bezeichnet werden kann, an dem zweiten Adapterelement. Das Gegenelement ist insbesondere in Form eines, vorzugsweise auf die Eigenfrequenz des ersten Rotorblatts oder Rotorblattsegments einstellbaren, Einmassenschwingers ausgebildet.

Das Verfahren zum zeitgleichen Testen von zwei Rotorblättern und/oder zwei Rotorblattsegmenten für eine Windenergieanlage und/oder das Verfahren zum Testen eines Rotorblatts und/oder eines Rotorblattsegments für eine Windenergieanlage ist bzw. sind vorzugsweise gekennzeichnet durch Transportieren einer zuvor beschriebenen Testvorrichtung zum Testort, vorzugsweise in demontierter Form.

Das Verfahren zum zeitgleichen Testen von zwei Rotorblättern und/oder zwei Rotorblattsegmenten für eine Windenergieanlage und/oder das Verfahren zum Testen eines Rotorblatts und/oder eines Rotorblattsegments für eine Windenergieanlage ist bzw. sind ferner vorzugsweise gekennzeichnet durch Bereitstellen eines Fundaments am Testort.

Das Verfahren zum zeitgleichen Testen von zwei Rotorblättern und/oder zwei Rotorblattsegmenten für eine Windenergieanlage und/oder das Verfahren zum Testen eines Rotorblatts und/oder eines Rotorblattsegments für eine Windenergieanlage ist bzw. sind vorzugsweise gekennzeichnet durch Aufbauen der Testvorrichtung am Testort.

Vorzugsweise werden die hier beschriebenen Verfahrensschritte in der genannten Reihenfolge durchgeführt. Es sind je nach Situation im Rahmen des technisch realisierbaren jedoch auch Abweichungen von der hier genannten Reihenfolge möglich.

Gemäß einem weiteren Aspekt der Erfindung wird die eingangs genannte Aufgabe gelöst durch die Verwendung einer zuvor beschriebenen Testvorrichtung zum Testen eines Rotorblatts und/oder eines Rotorblattsegments für eine Windenergieanlage und/oder zum zeitgleichen Testen von zwei Rotorblättern und/oder zwei Rotorblattsegmenten für eine Windenergieanlage.

Diese beschriebenen Verfahren weisen Merkmale bzw. Verfahrensschritte auf, die sie insbesondere dafür geeignet machen, mit einer zuvor beschriebenen Testvorrichtung und ihren Fortbildungen verwendet zu werden.

Hinsichtlich der Vorteile, bevorzugten Ausführungsformen und Details der einzelnen Aspekte und ihrer bevorzugten Ausführungsformen wird ebenfalls auf die entsprechenden Vorteile, bevorzugten Ausführungsformen und Details verwiesen, die mit Bezug auf die jeweils anderen Aspekte beschrieben sind.

Bevorzugte Ausführungsbeispiele werden beispielhaft anhand der beiliegenden Figuren beschrieben. Es zeigen:
- Figur 1:: eine schematische Darstellung einer Windenergieanlage;
- Figur 2a:: eine schematische Darstellung eines Ausführungsbeispiels einer Testvorrichtung für einen Ermüdungstest mit zwei Rotorblattsegmenten;
- Figur 2b:: eine vergrößerte Darstellung eines Details aus Figur 2a;
- Figur 3:: eine schematische Darstellung eines Ausführungsbeispiels einer Testvorrichtung für einen statischen Test mit zwei Rotorblattsegmenten;
- Figur 4a:: eine schematische dreidimensionale Ansicht eines Ausführungsbeispiels einer Testvorrichtung für einen Ermüdungstest mit zwei Rotorblättern;
- Figur 4b:: eine schematische Seitenansicht der Testvorrichtung nach Figur 4a;
- Figur 4c:: eine vergrößerte Darstellung eines Details aus Figur 4a;
- Figur 4d:: eine vergrößerte Darstellung eines Details der Testvorrichtung gemäß Figur 4a ohne Adapterelement und Rotorblatt;
- Figur 4e:: eine schematische dreidimensionale Ansicht der Testvorrichtung nach Figur 4a mit Anregungsvorrichtung;
- Figur 4f:: eine vergrößerte Darstellung eines Details der Testvorrichtung gemäß Figur 4e;
- Figur 5:: ein schematisches Ablaufdiagramm eines Ausführungsbeispiels eines Verfahrens zum zeitgleichen Testen von zwei Rotorblättern und/oder zwei Rotorblattsegmenten für eine Windenergieanlage; und
- Figur 6:: ein schematisches Ablaufdiagramm eines Ausführungsbeispiels eines Verfahrens zum Testen eines Rotorblatts und/oder eines Rotorblattsegments für eine Windenergieanlage.

In den Figuren sind gleiche oder im Wesentlichen funktionsgleiche Elemente mit den gleichen Bezugszeichen versehen. Allgemeine Beschreibungen beziehen sich in der Regel auf alle Ausführungsformen, sofern Unterschiede nicht explizit angegeben sind.

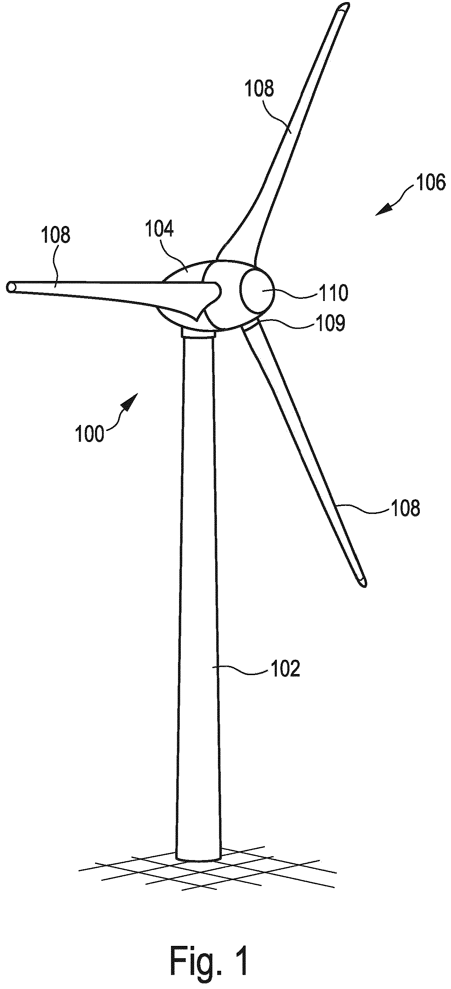

Fig. 1 zeigt eine schematische Darstellung einer Windenergieanlage 100 für die Rotorblätter 108 zum Einsatz kommen. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 109 der jeweiligen Rotorblätter 108 verändert werden.

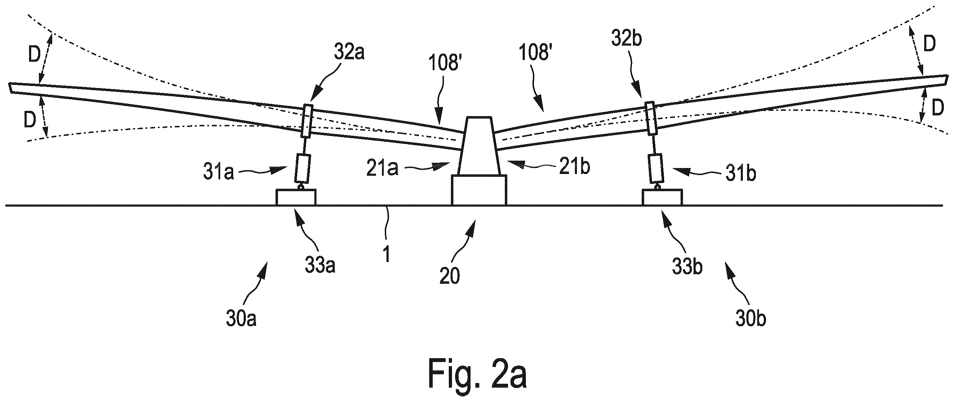

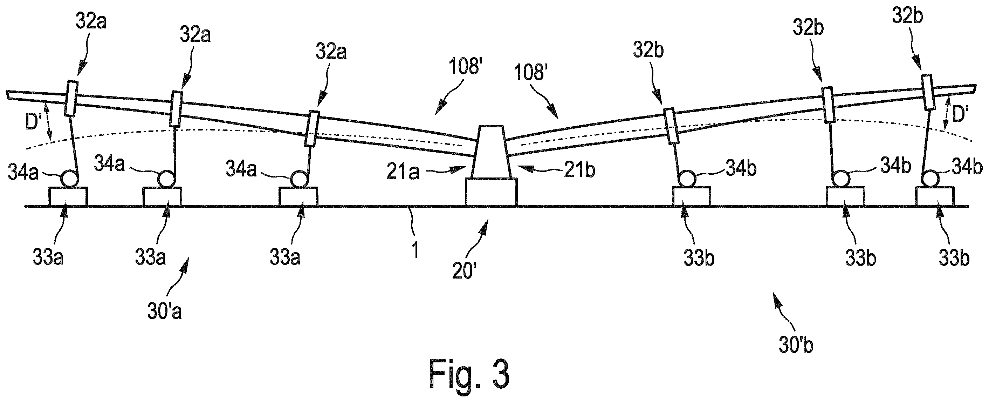

Figur 2a zeigt eine schematische Darstellung eines Ausführungsbeispiels einer Testvorrichtung 20 für einen Ermüdungstest mit zwei Rotorblattsegmenten 108'. Figur 3 zeigt eine schematische Darstellung eines Ausführungsbeispiels einer Testvorrichtung 20' für einen statischen Test mit zwei Rotorblattsegmenten 108'. Die beiden Testvorrichtungen 20, 20' unterscheiden sich insbesondere hinsichtlich der Anregungsvorrichtungen 30a, b, 30'a, b.

Beide Testvorrichtungen 20, 20' sind auf einem Fundament 1 angeordnet, das auch als Testplattform bezeichnet werden kann.

Beide Testvorrichtungen 20, 20' umfassen jeweils ein erstes Adapterelement 21a in Form einer Adapterplatte und ein zweites Adapterelement 21b in Form einer Adapterplatte. An diesen Adapterelementen sind die Flansche der Rotorblattsegmente 108' befestigt, vorzugsweise verschraubt.

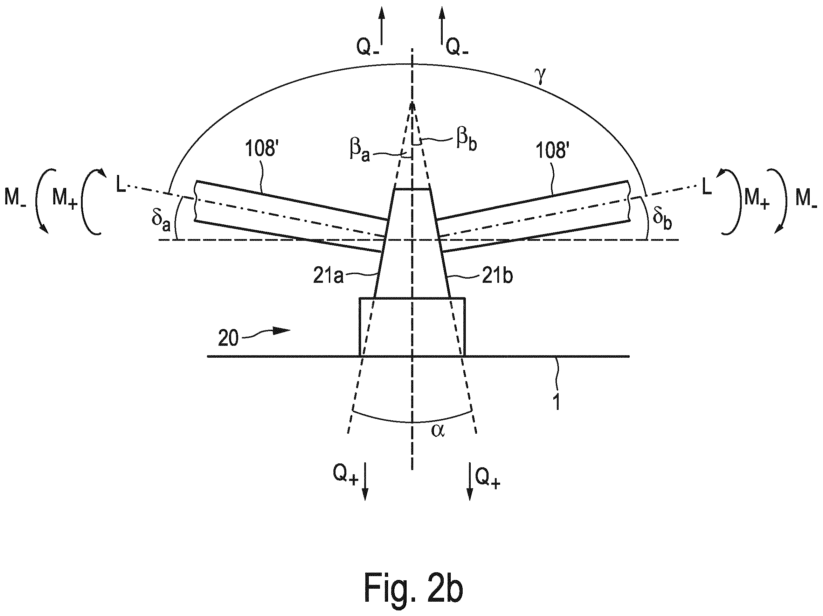

Wie insbesondere in Fig. 2b zu erkennen ist, schließen das erste und das zweite Adapterelement 21a, b zueinander einen Winkel α von ca. 40° ein, wobei das erste Adapterelement 21a zur Vertikalen einen Winkel βₐ von ca. 20° einschließt, und das zweite Adapterelement 21b zur Vertikalen einen Winkel β_{b} von 0° bis 20° einschließt.

Ferner schließen die Längsachse L des ersten Rotorblattsegments 108' und die Längsachse L des zweiten Rotorblattsegments 108' zueinander einen Winkel γ von ca. 140° ein. Die Längsachse L des ersten Rotorblattsegments schließt zur Horizontalen einen Winkel δₐ von ca. 20° ein, und die Längsachse L des zweiten Rotorblattsegments schließt zur Horizontalen einen Winkel δ_{b} von 0° bis 20° ein.

Die Testvorrichtung 20 für einen Ermüdungstest mit zwei Rotorblattsegmenten 108' gemäß Fig. 2a weist eine Anregungsvorrichtung 30a, b auf, die zwei Teil-Anregungsvorrichtungen umfasst. Jede der Teil-Anregungsvorrichtungen umfasst vorzugsweise einen Lastsattel 32a, b, einen Aktuator 31a, b (beispielsweise in Form eines hydraulischen Stellantriebs) und ist auf einem Betonblock 33a, b angeordnet. Die Betonblöcke 33a, b können, ebenso wie das Fundament 1, vor Ort mit geringem finanziellen Aufwand hergestellt werden. Die der Teil-Anregungsvorrichtungen, insbesondere deren Lastsattel 32a, b, sind in einem Abstand von der Blattwurzel an den Rotorblattsegmenten 108' befestigt.

Die Anregungsvorrichtung 30a, b ist ausgebildet, die Rotorblattsegmente 108' mit zyklischen Ermüdungsbelastungen anzuregen und die Rotorblattsegmente 108' in Schwingungen zu versetzen, wobei an der Spitze der Rotorblattsegmente 108' Durchbiegungen D sowohl nach oben als auch nach unten entstehen.

Bei einem solchen Ermüdungsversuch wird vorzugsweise eine Ermüdungsbelastung durch Anregung der ersten oder zweiten Eigenfrequenz der Rotorblätter und/oder Rotorblattsegmente aufgebracht (insbesondere flap-wise und/oder lead-lag-wise Test). Eine vorzugsweise synchrone Anregung der beiden Rotorblätter und/oder Rotorblattsegmente zur Eigenfrequenzschwingung in vertikaler Richtung kann z.B. über eine Anregungsvorrichtung 30a, b in Form von über Lastsattel 32a, b angekoppelten Hydraulikzylindern 31a, b erfolgen.

Bei einem statischen Test wie in Fig. 3 dargestellt werden die Rotorblattsegmente 108' quasistatisch mit extremen Belastungen getestet. Hierzu kann eine Anregungsvorrichtung 30'a, b mit mehreren Teil-Anregungsvorrichtungen zum Einsatz kommen. Jede der Teil-Anregungsvorrichtungen umfasst vorzugsweise einen Lastsattel 32a, b, einen Aktuator 34a, b (beispielsweise in Form einer elektrischen Winde) und ist auf einem Betonblock 33a, b angeordnet. Mit den Aktuatoren 34a, b werden die Rotorblattsegmente 108' nach unten ausgelenkt. Die Betonblöcke 33a, b können als Gegengewichte dienen. Es müssen auch hier keine oder keine signifikanten Biegemomente in das Fundament eingeleitet werden. Lediglich bzw. hauptsächlich sind die vertikalen Gegenkräfte der Rotorblattsegmente 108' und der Prüflasten in das Fundament einzuleiten. Ein Fundament 1 für solche Lasten ist relativ einfach zu installieren, ebenso wie die Betonblöcke 33a, b.

In Fig. 2b sind außerdem die Richtungen der auftretenden Querkräfte Q₊, Q₋ und Biegemomente M₊, M₋ angegeben.

Bei herkömmlichen Rotorblattprüfständen nach dem Stand der Technik muss das auf den Blattflansch aufgebrachte Biegemoment durch die Prüfstandskonstruktion in das Fundament und in den Boden übertragen werden. Bei den hier beschriebenen Testvorrichtungen 20, 20' wird das auf den Blattflansch einwirkende Biegemoment M₊, M₋direkt von dem zweiten Rotorblatt bzw. Rotorblattsegment aufgenommen, das "Rücken-an-Rücken" (oder auch "Flansch-an-Flansch") montiert ist. In der hier beschriebenen Lösung hat die Tragkonstruktion keine oder nur eine äußerst Biegemomentbelastung. Es sind nur bzw. hauptsächlich moderate vertikale Ermüdungslasten in Form von Querkräften Q₊, Q₋ zu bewältigen. Die hier beschriebene Lösung führt daher zu einem Prüfstand für sehr große Rotorblätter und/oder Rotorblattsegmente bei minimalen Investitionskosten.

Beide Testvorrichtungen 20, 20' gemäß den Figuren 2a und 3 sind so ausgebildet, dass sie Rotorblätter und/oder Rotorblattsegmente in eine vertikale Richtung anregen. Die Testvorrichtungen 20, 20' können vorzugsweise auch so ausgebildet sein, dass sie Rotorblätter und/oder Rotorblattsegmente in eine horizontale Richtung anregen. Hierzu können die Testvorrichtungen 20, 20' entsprechend verstellbar ausgebildet sein.

Gemäß den Figuren 2a und 3 sind die Flansche der beiden Rotorblattsegmente 108' "Rücken-an-Rücken" angeordnet, was auch als "Kurzschließen" bezeichnet werden kann. Hierdurch werden die Flanschmomente direkt zwischen den beiden Flanschen aufgehoben. Vorzugsweise kommen hierfür zwei gleiche Rotorblätter bzw. Rotorblattsegmente 108' zum Einsatz.

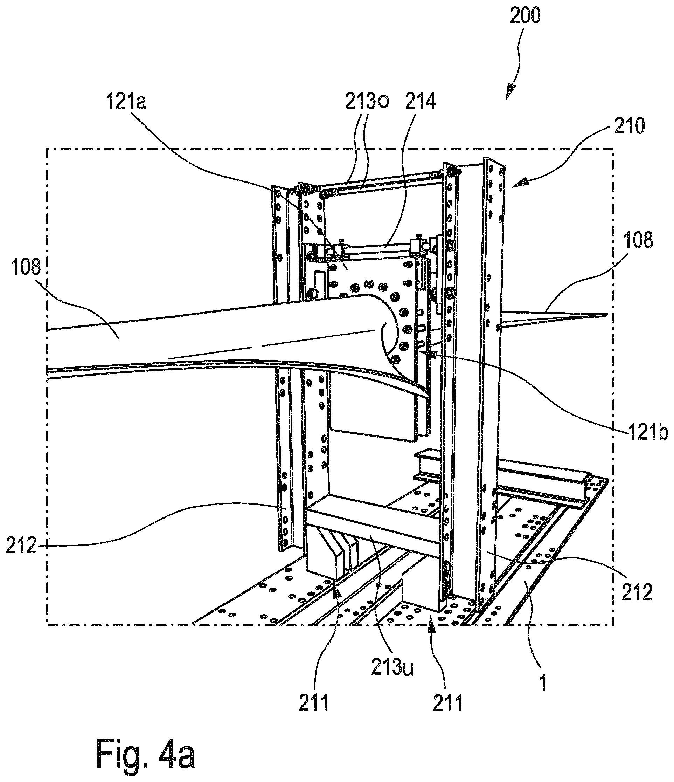

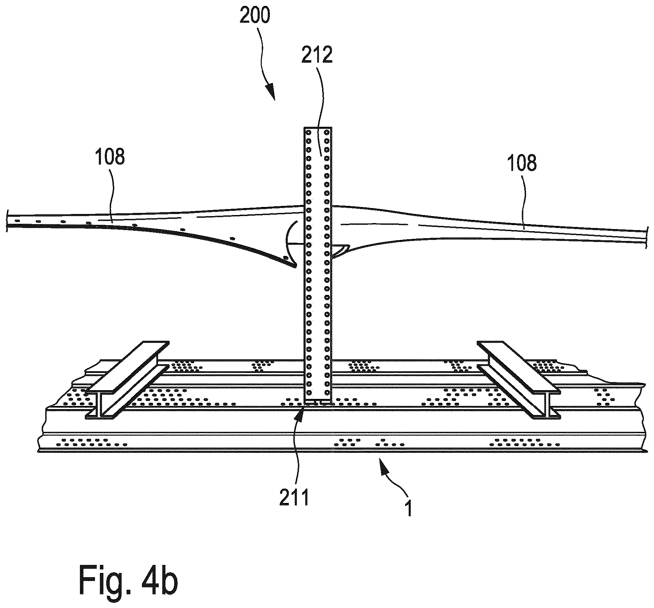

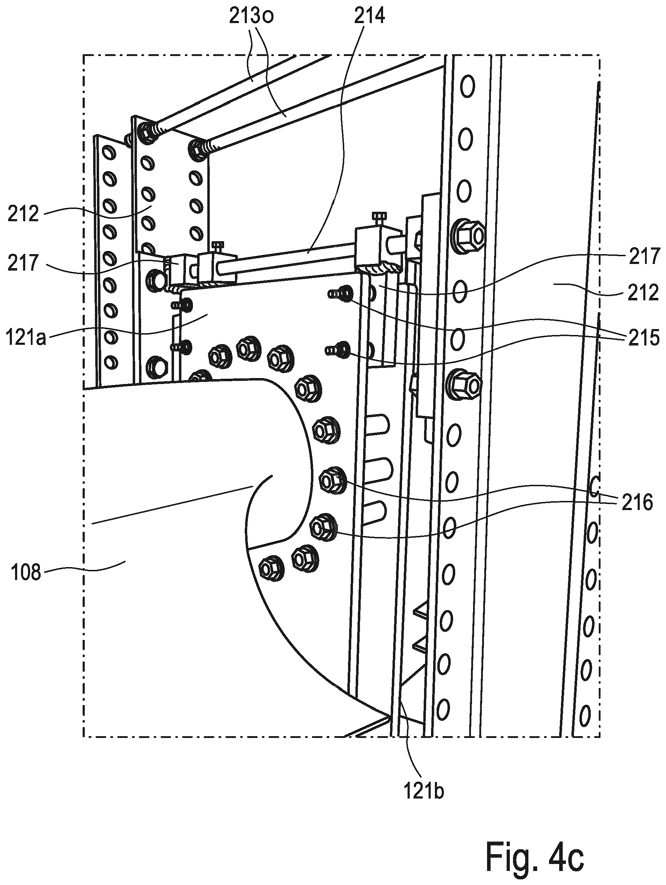

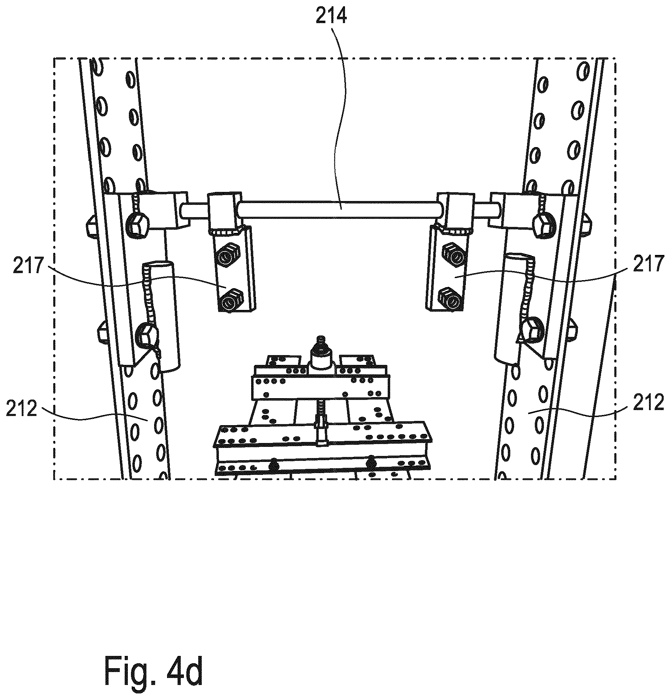

In den Fig. 4a-4f ist eine schematische Darstellung eines Ausführungsbeispiels einer Testvorrichtung 200 für einen Ermüdungstest mit zwei Rotorblättern gezeigt. Hier wurden Test mit zwei gleichen Rotorblättern 108 durchgeführt.

Die beiden Rotorblätter 108 sind über zwei Adapterplatten 121a, b mittels Schraubverbindungen 215, 216 miteinander und mit der Tragkonstruktion 210 verbunden. Die Adapterplatten 121a, b sind gegeneinander ("Rücken-an-Rücken") mit der gelenkig gelagerten Drehachse 214 der Tragkonstruktion 210 verschraubt. Zwischen den Adapterplatten 121a, b können vorzugsweise Abstandshalter angeordnet sein.

Die Tragkonstruktion 210 ist über eine Fundamentanbindung 211 auf einem Fundament 1 angeordnet, das im Betrieb fast nur vertikale Belastungen aufnehmen muss.

Die Tragkonstruktion 210 umfasst zwei im Betrieb im Wesentlichen senkrecht stehende Stahlprofile 212, beispielsweise HEB-Profile. Die über obere Querstreben 213o und über eine untere Querstrebe 213u miteinander verbunden sind. Ferner verbindet die gelenkig gelagerte Drehachse 214 die Stahlprofile 212.

Die beiden Adapterplatten 121a, b sind an der gemeinsamen Drehachse 214 aufgehängt, um den Effekt zu verstärken, dass möglichst kein Biegemoment auf die Tragkonstruktion 210 und/oder das Fundament 1 übertragen wird. Dabei sind die beiden Adapterplatten 121a, b direkt mit Spannankern 216 miteinander und mit Spannankern 215 über die an der Drehachse 214 aufgehängten Pendelelemente 217 mit der Tragkonstruktion 210 verbunden. Die Rotorblattflansche können von den Innenseiten der Adapterplatten 121a, b aus mit diesen verschraubt sein. Vorzugsweise sind die Adapterplatten 121a, b voneinander beabstandet.

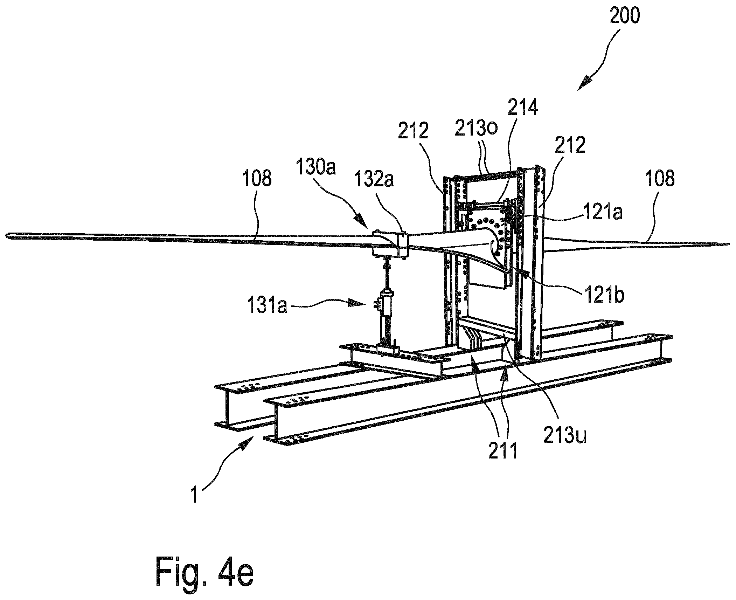

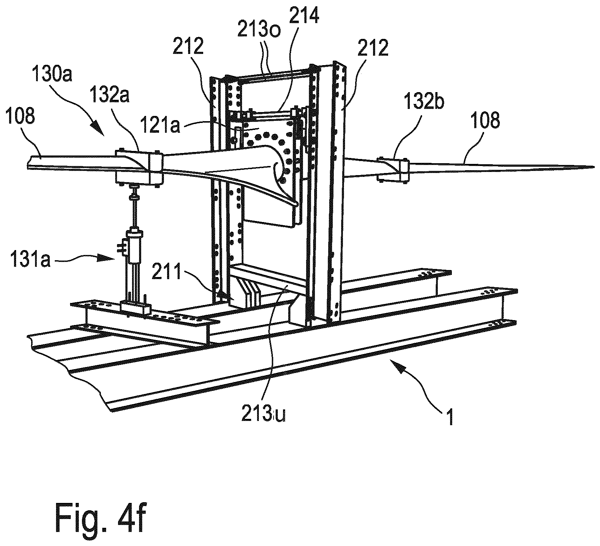

Die Testvorrichtung 200 weist ferner eine Anregungsvorrichtung 130a auf, wie insbesondere in den Fig. 4e und 4f zu erkennen ist. An jedem der Rotorblätter 108 ist jeweils ein Lastsattel 132a, b angeordnet, was bei der Anregung beider Rotorblätter 108 bevorzugt ist, aber auch bei der Anregung nur eines Rotorblatts 108 den Vorteil hat, dass die Eigenfrequenzen der beiden Rotorblätter so ähnlich wie möglich eingestellt werden können. In dem in den Fig. 4e und 4f dargestellten Test wurde nur ein Rotorblatt 108 angeregt. Dazu ist mit dem Lastsattel 132a ein Aktuator 131a, hier im Beispiel ein pneumatischer Aktuator, mit dem Lastsattel 132a gekoppelt und angesteuert, um die Rotorblätter 108 mit der erste Eigenfrequenz anzuregen. Die Ansteuerung des Aktuators 131a erfolgt beispielsweise über eine Soft-SPS, die in einen PMX-Messverstärker von HBM integriert ist. Bei Kopplung eines weiteren Aktuators mit dem zweiten Lastsattel 132b können mit der Testvorrichtung 200 auch beide Rotorblätter gleichzeitig direkt angeregt werden. Wird nur ein Rotorblatt 108 über einen Aktuator direkt angeregt, schwingt das zweite Rotorblatt über die direkte Kopplung und Rücken-an-Rücken-Anordnung der beiden Rotorblätter mit.

Beim Versuch mit einem Aktuator schwangen beide Rotorblätter 108 spiegelbildlich zu den Adapterplatten (siehe Figur 4e), wenn sie in ihrer ersten Eigenfrequenz angeregt wurden.

In einem (nicht dargestellten) Test mit zwei Aktuatoren wurden beide Rotorblätter 108 mit einem Aktuator an jedem Rotorblatt angeregt. Beide Flügel schwangen spiegelbildlich zu den Adapterplatte, wenn sie in ihrer ersten Eigenfrequenz angeregt wurden.

Durch Aufbringen von Trimmgewichten, beispielsweise in Form weiterer Lastsattel, auf die Rotorblätter 108 kann ferner die Eigenfrequenz verändert, z.B. reduziert, werden. Dadurch ist eine Anpassung des Versuchsaufbaus an unterschiedliche Prüffrequenzen einfach zu bewerkstelligen.

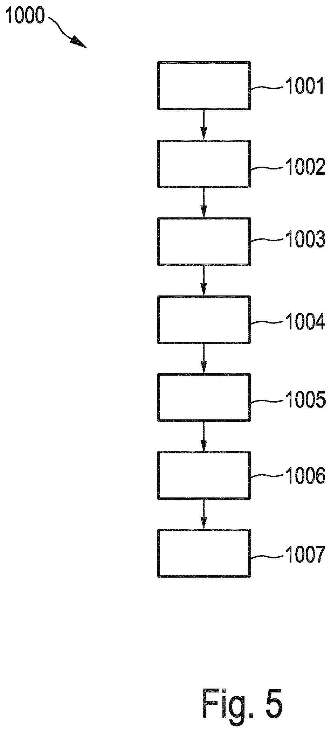

Figur 5 zeigt ein schematisches Ablaufdiagramm eines Ausführungsbeispiels eines Verfahrens (1000) zum zeitgleichen Testen von zwei Rotorblättern und/oder zwei Rotorblattsegmenten für eine Windenergieanlage. Vorzugsweise wird zunächst in einem Schritt 1001 eine Testvorrichtung zum Testort transportiert, vorzugsweise in demontierter Form, und dann vorzugsweise am Testort in einem Schritt 1002 aufgebaut. Ferner vorzugsweise wird am Testort erforderlichenfalls ein Fundament bereitgestellt.

Im Schritt 1003 wird ein erstes Rotorblatt oder Rotorblattsegment an einem ersten Adapterelement befestigt. Im Schritt 1004 wird ein zweites Rotorblatt oder Rotorblattsegment an einem zweiten Adapterelement befestigt. Im Schritt 1005 werden die ersten und zweiten Adapterelemente miteinander verbunden und im Schritt 1006 an einer Tragkonstruktion angeordnet, bevor im Schritt 1007 eine statische und/oder zyklische Belastung auf das erste und/oder zweite Rotorblatt oder Rotorblattsegment aufgebracht wird, wobei das Aufbringen der zyklischen Belastung auf das erste und das zweite Rotorblatt oder Rotorblattsegment synchron erfolgen kann.

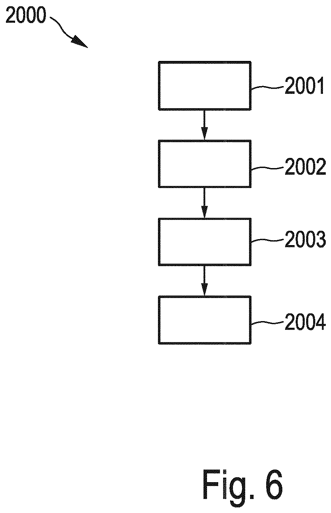

Figur 6 zeigt ein schematisches Ablaufdiagramm eines Ausführungsbeispiels eines Verfahrens (2000) zum Testen eines Rotorblatts und/oder eines Rotorblattsegments für eine Windenergieanlage. In einem Schritt 2001 ein erstes Rotorblatt oder Rotorblattsegment an dem ersten Adapterelement befestigt und das erste Adapterelement im Schritt 2002 an einer Tragkonstruktion angeordnet. Ferner ist es bevorzugt, dass im Schritt 2003 ein Gegenelement, insbesondere in Form eines, vorzugsweise auf die Eigenfrequenz des ersten Rotorblatts oder Rotorblattsegments einstellbaren, Einmassenschwingers, an dem zweiten Adapterelement befestigt wird. Im Schritt 2004 wird dann eine statische und/oder zyklische Belastung auf das erste zweite Rotorblatt oder Rotorblattsegment aufgebracht.

Vorzugsweise werden die hier beschriebenen Verfahrensschritte in der genannten Reihenfolge durchgeführt. Es sind je nach Situation im Rahmen des technisch realisierbaren jedoch auch Abweichungen von der hier genannten Reihenfolge möglich.

## Patentansprüche

1. Testvorrichtung (20, 20', 210) zum zeitgleichen Testen von zwei Rotorblättern (108) und/oder zwei Rotorblattsegmenten (108') für eine Windenergieanlage (100), umfassend
- ein erstes Adapterelement (21a) zur Befestigung eines ersten Rotorblatts (108) oder Rotorblattsegments (108') daran,
- ein zweites Adapterelement (21b) zur Befestigung eines zweiten Rotorblatts (108) oder Rotorblattsegments (108') daran,
- eine Tragkonstruktion (210), an der das erste und zweite Adapterelement (21a, 21b) befestigt sind,
- eine Anregungsvorrichtung (30a,b, 30'a,b), die ausgebildet ist, eine statische und/oder zyklische Belastung auf das erste und/oder zweite Rotorblatt (108) oder Rotorblattsegment (108') aufzubringen,
- wobei das erste und das zweite Adapterelement (21a, 21b) miteinander verbunden sind.

2. Testvorrichtung (20, 20', 210) nach dem vorhergehenden Anspruch,
**dadurch gekennzeichnet, dass** das erste und zweite Adapterelement um eine gemeinsame Drehachse drehbar an der Tragkonstruktion befestigt sind, wobei vorzugsweise die gemeinsame Drehachse im Wesentlichen orthogonal zu Längsachsen von im Testbetrieb an dem ersten und/oder zweiten Adapterelement befestigten Rotorblättern und/oder Rotorblattsegmenten ausgerichtet ist, und/oder wobei vorzugsweise die gemeinsame Drehachse horizontal und/oder vertikal ausgerichtet ist, und/oder wobei vorzugsweise die gemeinsame Drehachse verstellbar, insbesondere zwischen einer horizontalen Position und einer vertikalen Position verstellbar, ausgebildet ist.

3. Testvorrichtung (20, 20', 210) nach mindestens einem der vorhergehenden Ansprüche,
**dadurch gekennzeichnet, dass** die Tragkonstruktion ausgebildet ist, Querkräfte, insbesondere vertikale Kräfte und/oder horizontale Kräfte, und Biegemomente aufzunehmen, wobei das Verhältnis der von der Tragkonstruktion aufnehmbaren Biegemomente in kNm zu den von der Tragkonstruktion aufnehmbaren Querkräften in kN vorzugsweise maximal 15 beträgt, insbesondere maximal 10, maximal 5, oder maximal 3,5.

4. Testvorrichtung (20, 20', 210) nach mindestens einem der vorhergehenden Ansprüche,
umfassend ein Fundament, wobei das Fundament ausgebildet ist, Querkräfte, insbesondere vertikale Kräfte und/oder horizontale Kräfte, und Biegemomente aufzunehmen, wobei das Verhältnis der von der Tragkonstruktion aufnehmbaren Biegemomente in kNm zu den von der Tragkonstruktion aufnehmbaren Querkräften in kN vorzugsweise maximal 15 beträgt, insbesondere maximal 10, maximal 5, oder maximal 3,5.

5. Testvorrichtung (20, 20', 210) nach mindestens einem der vorhergehenden Ansprüche,
**dadurch gekennzeichnet, dass** die Anbindung zwischen Tragkonstruktion und Fundament ausgebildet ist, Querkräfte, insbesondere vertikale Kräfte und/oder horizontale Kräfte, und Biegemomente aufzunehmen, wobei das Verhältnis der von der Tragkonstruktion aufnehmbaren Biegemomente in kNm zu den von der Tragkonstruktion aufnehmbaren Querkräften in kN vorzugsweise maximal 15 beträgt, insbesondere maximal 10, maximal 5, oder maximal 3,5.

6. Testvorrichtung (20, 20', 210) nach mindestens einem der vorhergehenden Ansprüche,
**dadurch gekennzeichnet, dass** das erste und das zweite Adapterelement zueinander einen Winkel (α) von 0° bis 40°, insbesondere von 0° bis 10°, einschließen, und/oder
**dadurch gekennzeichnet, dass** das erste Adapterelement zur Vertikalen einen Winkel (βₐ) von 0° bis 20°, insbesondere von 0° bis 5°, einschließt, und/oder das zweite Adapterelement zur Vertikalen einen Winkel (β_{b}) von 0° bis 20°, insbesondere von 0° bis 5°, einschließt.

7. Testvorrichtung (20, 20', 210) nach mindestens einem der vorhergehenden Ansprüche,
**dadurch gekennzeichnet, dass** die Längsachse (L) des ersten Rotorblatts oder Rotorblattsegments und die Längsachse (L) des zweiten Rotorblatts oder Rotorblattsegments zueinander einen Winkel (γ) von 180° bis 140°, insbesondere von 180° bis 170°, einschließen, und/oder
**dadurch gekennzeichnet, dass** die Längsachse (L) des ersten Rotorblatts oder Rotorblattsegments zur Horizontalen einen Winkel (δₐ) von 0° bis 20°, insbesondere von 0° bis 5°, einschließt, und/oder die Längsachse (L) des zweiten Rotorblatts oder Rotorblattsegments zur Horizontalen einen Winkel (δ_{b}) von 0° bis 20°, insbesondere von 0° bis 5°, einschließt.

8. Testvorrichtung (20, 20', 210) nach mindestens einem der vorhergehenden Ansprüche,
**dadurch gekennzeichnet, dass** das erste und/oder das zweite Adapterelement als Adapterplatte ausgebildet ist bzw. sind,
wobei vorzugsweise das erste Adapterelement und das zweite Adapterelement direkt mit Spannankern miteinander und mit der Tragkonstruktion verbunden sind, und/oder wobei vorzugsweise zwischen dem ersten und dem zweiten Adapterelement ein, zwei oder mehrere Abstandshalter angeordnet sind, und/oder
**dadurch gekennzeichnet, dass** die Anregungsvorrichtung einen Aktuator oder mehrere Aktuatoren umfasst, und/oder **dadurch gekennzeichnet, dass** die Anregungsvorrichtung ausgebildet ist, das erste und das zweite Rotorblatt oder Rotorblattsegment gleich anzuregen, insbesondere synchron und/oder mit der gleichen Frequenz, vorzugsweise mit der ersten oder zweiten Eigenfrequenz des ersten und zweiten Rotorblatts oder Rotorblattsegments.

9. Testvorrichtung (20, 20', 210) nach mindestens einem der vorhergehenden Ansprüche,
**dadurch gekennzeichnet, dass** die Testvorrichtung demontierbar und/oder transportabel ausgebildet ist, wobei vorzugsweise mehrere Bestandteile der Testvorrichtung, insbesondere alle Bestandteile der Testvorrichtung außer dem Fundament, zusammen in einem Standardcontainer, insbesondere einem ISO-Container und/oder auf einem LKW, insbesondere einem LKW bis 40t, und/oder auf einem Sattelauflieger, insbesondere einem Sattelauflieger mit maximalen Außenmaßen von 13,68 m × 2,55 m × 4,00 m, transportabel sind.

10. Verfahren (1000) zum zeitgleichen Testen von zwei Rotorblättern (108) und/oder zwei Rotorblattsegmenten für eine Windenergieanlage (100), **gekennzeichnet durch**:
- Bereitstellen einer Testvorrichtung nach einem der vorhergehenden Ansprüche 1 bis 9,
- Befestigen (1003) eines ersten Rotorblatts (108) oder Rotorblattsegments (108') an dem ersten Adapterelement (21a),
- Befestigen (1004) eines zweiten Rotorblatts (108) oder Rotorblattsegments (108') an dem zweiten Adapterelement (21b),
- Verbinden (1005) der ersten und zweiten Adapterelemente (21a, 21b) miteinander,
- Anordnen (1006) des ersten und zweiten Adapterelements (21a, 21b) an der Tragkonstruktion,
- Aufbringen (1007) der statischen und/oder zyklischen Belastung durch die Anregungsvorrichtung (30a,b, 30'a,b) auf das erste und/oder zweite Rotorblatt (108) oder Rotorblattsegment (108').

11. Verfahren nach dem vorhergehenden Anspruch,
- **dadurch gekennzeichnet, dass** das erste und/oder das zweite Rotorblattsegment einen Bereich von 30% bis 99%, vorzugsweise einen Bereich von mindestens 60% oder mindestens 80%, der Gesamtlänge des Rotorblatts umfasst, insbesondere von der Blattwurzel an, und/oder
- **dadurch gekennzeichnet, dass** das erste und das zweite Rotorblatt oder Rotorblattsegment im Wesentlichen gleich ausgebildet sind, und/oder
- **gekennzeichnet durch** synchrones Aufbringen einer zyklischen Belastung auf das erste und das zweite Rotorblatt oder Rotorblattsegment.

12. Verfahren (2000) zum Testen eines Rotorblatts (108) und/oder eines Rotorblattsegments für eine Windenergieanlage (100), **gekennzeichnet durch**:
- Bereitstellen einer Testvorrichtung nach einem der vorhergehenden Ansprüche 1 bis 9,
- Befestigen (2001) eines ersten Rotorblatts (108) oder Rotorblattsegments (108') an dem ersten Adapterelement (21a),
- Anordnen (2002) des ersten Adapterelements (21a) an der Tragkonstruktion,
- Aufbringen der statischen und/oder zyklischen Belastung (2004) durch die Anregungsvorrichtung (30a,b, 30'a,b) auf das erste Rotorblatt (108) oder Rotorblattsegment (108').

13. Verfahren nach dem vorhergehenden Anspruch,
- **dadurch gekennzeichnet, dass** das erste Rotorblattsegment einen Bereich von 30% bis 99%, vorzugsweise einen Bereich von mindestens 60% oder mindestens 80%, der Gesamtlänge des Rotorblatts umfasst, insbesondere von der Blattwurzel an, und/oder
- **gekennzeichnet durch** Anordnen eines Gegenelements (2003), insbesondere in Form eines, vorzugsweise auf die Eigenfrequenz des ersten Rotorblatts oder Rotorblattsegments einstellbaren, Einmassenschwingers, an dem zweiten Adapterelement.

14. Verfahren nach mindestens einem der vorhergehenden Ansprüche 10-13, umfassend:
- Transportieren (1001) einer Testvorrichtung (20, 20', 210) nach mindestens einem der vorhergehenden Ansprüche 1-9 zum Testort, vorzugsweise in demontierter Form, und/oder
- Bereitstellen eines Fundaments (1) am Testort, und/oder
- Aufbauen (1002) der Testvorrichtung (20, 20', 210) am Testort.

15. Verwendung einer Testvorrichtung (20, 20', 210) nach mindestens einem der vorhergehenden Ansprüche 1-9 zum Testen eines Rotorblatts (108) und/oder eines Rotorblattsegments (108') für eine Windenergieanlage (100) und/oder zum zeitgleichen Testen von zwei Rotorblättern (108) und/oder zwei Rotorblattsegmenten (108') für eine Windenergieanlage (100).

## Claims

1. Testing device (20, 20', 210) for simultaneously testing two rotor blades (108) and/or two rotor blade segments (108') for a wind power installation (100), comprising
- a first adapter element (21a) for fastening thereto a first rotor blade (108) or rotor blade segment (108');
- a second adapter element (21b) for fastening thereto a second rotor blade (108) or rotor blade segment (108');
- a support structure (210) to which the first and the second adapter element (21a, 21b) are fastened;
- an excitation device (30a,b, 30'a,b) which is configured to apply a static and/or cyclic load to the first and/or the second rotor blade (108) or rotor blade segment (108');
- wherein the first and the second adapter element (21a, 21b) are connected to each other.

2. Testing device (20, 20', 210) according to the preceding claim,
**characterized in that** the first and the second adapter element are fastened to the support structure so as to be rotatable about a common rotation axis, wherein the common rotation axis is preferably aligned so as to be substantially orthogonal to longitudinal axes of rotor blades and/or rotor blade segments that during the testing operation are fastened to the first and/or the second adapter element; and/or wherein the common rotation axis is preferably aligned so as to be horizontal and/or vertical; and/or wherein the common rotation axis is preferably configured so as to be adjustable, in particular adjustable between a horizontal position and a vertical position.

3. Testing device (20, 20', 210) according to at least one of the preceding claims,
**characterized in that** the support structure is configured to absorb lateral forces, in particular vertical forces and/or horizontal forces, and bending moments, wherein the ratio of the bending moments in kNm able to be absorbed by the support structure to the lateral forces in kN able to be absorbed by the support structure is preferably at most 15, in particular at most 10, at most 5, or at most 3.5.

4. Testing device (20, 20', 210) according to at least one of the preceding claims,
comprising a foundation, wherein the foundation is configured to absorb lateral forces, in particular vertical forces and/or horizontal forces, and bending moments, wherein the ratio of the bending moments in kNm able to be absorbed by the support structure to the lateral forces in kN able to be absorbed by the support structure is preferably at most 15, in particular at most 10, at most 5, or at most 3.5.

5. Testing device (20, 20', 210) according to at least one of the preceding claims,
**characterized in that** the link between the support structure and the foundation is configured to absorb lateral forces, in particular vertical forces and/or horizontal forces, and bending moments, wherein the ratio of the bending moments in kNm able to be absorbed by the support structure to the lateral forces in kN able to be absorbed by the support structure is preferably at most 15, in particular at most 10, at most 5, or at most 3.5.

6. Testing device (20, 20', 210) according to at least one of the preceding claims,
**characterized in that** the first and the second adapter element mutually include an angle (α) of 0° to 40°, in particular of 0° to 10°, and/or **characterized in that** first adapter element in relation to the vertical includes an angle (βₐ) of 0° to 20°, in particular of 0° to 5°, and/or the second adapter element in relation to the vertical includes an angle (β_{b}) of 0° bis 20°, in particular of 0° to 5°.

7. Testing device (20, 20', 210) according to at least one of the preceding claims,
**characterized in that** the longitudinal axis (L) of the of the first rotor blade or rotor blade segment and the longitudinal axis (L) of the second rotor blade or rotor blade segment mutually include an angle (γ) of 180° to 140°, in particular of 180° to 170°; and/or
**characterized in that** the longitudinal axis (L) of the first rotor blade or rotor blade segment in relation to the horizontal includes an angle (δₐ) of 0° to 20°, in particular of 0° to 5°, and/or the longitudinal axis (L) of the second rotor blade or rotor blade segment in relation to the horizontal includes an angle (δ_{b}) of 0° to 20°, in particular of 0° to 5°.

8. Testing device (20, 20', 210) according to at least one of the preceding claims,
**characterized in that** the first and/or the second adapter element are/is configured as an adapter plate, wherein the first adapter element and the second adapter element are preferably connected directly to each other and to the support structure by ties, and/or wherein two or more spacers are preferably disposed between the first and the second adapter element; and/or **characterized in that** the excitation device comprises one actuator or a plurality of actuators, and/or **characterized in that** the excitation device is configured to identically excite the first and the second rotor blade or rotor blade segment, in particular in a synchronous manner and/or at the same frequency, preferably at the first or the second inherent frequency of the first and the second rotor blade or rotor blade segment.

9. Testing device (20, 20', 210) according to at least one of the preceding claims,
**characterized in that** the testing device is configured so as to be able to be disassembled and/or transported, wherein a plurality of component parts of the testing device, in particular all component parts of the testing device, with the exception of the foundation, are preferably able to be transported conjointly in a standard container, in particular an ISO container and/or on a motor truck, in particular a motor truck of up to 40 t, and/or on a semitrailer, in particular a semitrailer having maximum external dimensions of 13.68 m x 2.55 m x 4.00 m.

10. Method (1000) for simultaneously testing two rotor blades (108) and/or two rotor blade segments for a wind power installation (100),
**characterized by**:
- providing a testing device according to one of the preceding claims 1 to 9;
- fastening (1003) a first rotor blade (108) or rotor blade segment (108') to the first adapter element (21a);
- fastening (1004) a second rotor blade (108) or rotor blade segment (108') to the second adapter element (21b);
- connecting (1005) the first and the second adapter elements (21a, 21b) to each other;
- disposing (1006) the first and the second adapter element (21a, 21b) on the support structure;
- applying (1007) the static and/or cyclic load to the first and/or the second rotor blade (108) or rotor blade segment (108') by means of the excitation device (30a,b, 30'a,b).

11. Method according to the preceding claim,
- **characterized in that** the first and/or the second rotor blade segment comprises a region of 30% to 99%, preferably a region of at least 60% or at least 80%, of the overall length of the rotor blade, in particular proceeding from the blade root; and/or
- **characterized in that** the first and the second rotor blade or rotor blade segment are of substantially identical configuration; and/or
- **characterized by** applying in a synchronized manner a cyclic load to the first and the second rotor blade or rotor blade segment.

12. Method (2000) for testing a rotor blade (108) and/or a rotor blade segment for a wind power installation (100),
**characterized by**:
- providing a testing device according to one of the preceding claims 1 to 9;
- fastening (2001) a first rotor blade (108) or rotor blade segment (108') to the first adapter element (21a);
- disposing (2002) the first adapter element (21a) on the support structure;
- applying the static and/or cyclic load (2004) to the first rotor blade (108) or rotor blade segment (108') by means of the excitation device (30a,b, 30'a,b).

13. Method according to the preceding claim,
- **characterized in that** the first rotor blade segment comprises a region of 30% to 99%, preferably a region of at least 60% or at least 80%, of the overall length of the rotor blade, in particular proceeding from the blade root; and/or
- **characterized by** disposing a counter element (2003), in particular in the form of a single mass oscillator, preferably adjustable to the inherent frequency of the first rotor blade or rotor blade segment, on the second adapter element.

14. Method according at least one of preceding claims 10 to 13, said method comprising the following steps:
- transporting (1001) a testing device (20, 20', 210) according to at least one of preceding claims 1 to 9 to the testing site, preferably in the disassembled form; and/or
- providing a foundation (1) at the testing site; and/or
- erecting (1002) the testing device (20, 20', 210) at the testing site.

15. Use of a testing device (20, 20', 210) according to at least one of preceding claims 1 to 9 for testing a rotor blade (108) and/or a rotor blade segment (108') for a wind power installation (100), and/or for simultaneously testing two rotor blades (108) and/or two rotor blade segments (108') for a wind power installation (100).

## Revendications

1. Dispositif de test (20, 20', 210) pour tester simultanément deux pales de rotor (108) et/ou deux segments de pale de rotor (108') pour une éolienne (100), comprenant
- un premier élément adaptateur (21a) destiné à fixer dessus une première pale de rotor (108) ou un segment de pale de rotor (108'),
- un deuxième élément adaptateur (21b) destiné à fixer dessus une deuxième pale de rotor (108) ou un segment de pale de rotor (108'),
- une structure porteuse (210), sur laquelle sont fixés le premier et le deuxième élément adaptateur (21a, 21b),
- un dispositif d'excitation (30a,b, 30'a,b), qui est réalisé pour appliquer une charge statique et/ou cyclique sur la première et/ou la deuxième pale de rotor (108) ou le segment de pale de rotor (108'),
- dans lequel le premier et le deuxième élément adaptateur (21a, 21b) sont reliés l'un à l'autre.

2. Dispositif de test (20, 20', 210) selon la revendication précédente,
**caractérisé en ce que** le premier et le deuxième élément adaptateur sont fixés sur la structure porteuse de manière à pouvoir tourner autour d'un axe de rotation commun, dans lequel de préférence l'axe de rotation commun est orienté sensiblement orthogonalement aux axes longitudinaux de pales de rotor et/ou de segments de pales de rotor fixés sur le premier et/ou le deuxième élément adaptateur dans le mode test, et/ou dans lequel de préférence l'axe de rotation commun est orienté horizontalement et/ou verticalement, et/ou dans lequel de préférence l'axe de rotation commun est réalisé de manière ajustable, en particulier de manière ajustable entre une position horizontale et une position verticale.

3. Dispositif de test (20, 20', 210) selon au moins l'une quelconque des revendications précédentes,
**caractérisé en ce que** la structure porteuse est réalisée pour absorber des forces transversales, en particulier des forces verticales et/ou horizontales, et des couples de flexion, dans lequel le rapport entre les couples de flexion en kNm pouvant être absorbés par la structure porteuse et les forces transversales en kN pouvant être absorbées par la structure porteuse est de préférence de 15 au maximum, en particulier de 10 au maximum, de 5 au maximum, ou de 3,5 au maximum.

4. Dispositif de test (20, 20', 210) selon au moins l'une quelconque des revendications précédentes,
comprenant une fondation, dans lequel la fondation est réalisée pour absorber des forces transversales, en particulier des forces verticales et/ou horizontales, ainsi que des couples de flexion, dans lequel le rapport entre les couples de flexion en kNm pouvant être absorbés par la structure porteuse et les forces transversales en kN pouvant être absorbées par la structure porteuse est de préférence de 15 au maximum, en particulier de 10 au maximum, de 5 au maximum, ou de 3,5 au maximum.

5. Dispositif de test (20, 20', 210) selon au moins l'une quelconque des revendications précédentes,
**caractérisé en ce que** la liaison entre la structure porteuse et la fondation est réalisée pour absorber des forces transversales, en particulier des forces verticales et/ou des forces horizontales, et des couples de flexion, dans lequel le rapport entre les couples de flexion en kNm pouvant être absorbés par la structure porteuse et les forces transversales en kN pouvant être absorbées par la structure porteuse est de préférence de 15 au maximum, en particulier de 10 au maximum, de 5 au maximum, ou de 3,5 au maximum.

6. Dispositif de test (20, 20', 210) selon au moins l'une quelconque des revendications précédentes,
**caractérisé en ce que** le premier et le deuxième élément adaptateur forment l'un par rapport à l'autre un angle (α) de 0° à 40°, en particulier de 0° à 10°, et/ou
**caractérisé en ce que** le premier élément adaptateur forme par rapport à la verticale un angle (βₐ) de 0° à 20°, en particulier de 0° à 5°, et/ou le deuxième élément adaptateur forme par rapport à la verticale un angle (β_{b}) de 0° à 20°, en particulier de 0° à 5°.

7. Dispositif de test (20, 20', 210) selon au moins l'une quelconque des revendications précédentes,
**caractérisé en ce que** l'axe longitudinal (L) de la première pale de rotor ou du premier segment de pale de rotor et l'axe longitudinal (L) de la deuxième pale de rotor ou du deuxième segment de pale de rotor forment l'un par rapport à l'autre un angle ( γ) de 180° à 140°, en particulier de 180° à 170°, et/ou
**caractérisé en ce que** l'axe longitudinal (L) de la première pale de rotor ou du premier segment de pale de rotor forme par rapport à l'horizontale un angle (δₐ) de 0° à 20°, en particulier de 0° à 5°, et/ou l'axe longitudinal (L) de la deuxième pale de rotor ou du deuxième segment de pale de rotor forme par rapport à l'horizontale un angle (δ_{b}) de 0° à 20°, en particulier de 0° à 5°.

8. Dispositif de test (20, 20', 210) selon au moins l'une quelconque des revendications précédentes,
**caractérisé en ce que** le premier et/ou le deuxième élément adaptateur est/sont réalisé(s) comme une plaque d'adaptation,
dans lequel, de préférence, le premier élément adaptateur et le deuxième élément adaptateur sont reliés directement l'un à l'autre par des ancrages de serrage et à la structure porteuse, et/ou dans lequel, de préférence, un, deux ou plusieurs écarteurs sont disposés entre le premier et le deuxième élément adaptateur, et/ou
**caractérisé en ce que** le dispositif d'excitation comprend un ou plusieurs actionneurs, et/ou **caractérisé en ce que** le dispositif d'excitation est réalisé pour exciter la première et la deuxième pale de rotor ou le premier et le deuxième segment de pale de rotor de la même manière, en particulier de manière synchrone et/ou avec la même fréquence, de préférence avec la première ou la deuxième fréquence propre de la première et de la deuxième pale de rotor ou du premier et du deuxième segment de pale de rotor.

9. Dispositif de test (20, 20', 210) selon au moins l'une quelconque des revendications précédentes,
**caractérisé en ce que** le dispositif de test est réalisé pour être démontable et/ou transportable, dans lequel de préférence plusieurs composants du dispositif de test, en particulier tous les composants du dispositif de test à l'exception de la fondation, peuvent être transportés ensemble dans un conteneur standard, en particulier un conteneur ISO et/ou sur un camion, en particulier un camion d'un poids allant jusqu'à 40 t, et/ou sur une semi-remorque, en particulier une semi-remorque avec des dimensions extérieures maximales de 13,68 m x 2,55 m x 4,00 m.

10. Procédé (1000) de test simultané de deux pales de rotor (108) et/ou de deux segments de pale de rotor pour une éolienne (100), **caractérisé par** :
- la mise à disposition d'un dispositif de test selon l'une quelconque des revendications précédentes 1 à 9,
- la fixation (1003) d'une première pale de rotor (108) ou d'un premier segment de pale de rotor (108') sur le premier élément adaptateur (21a),
- la fixation (1004) d'une deuxième pale de rotor (108) ou d'un deuxième segment de pale de rotor (108') sur le deuxième élément adaptateur (21b),
- la liaison (1005) des premier et deuxième éléments adaptateurs (21a, 21b) l'un à l'autre,
- la disposition (1006) du premier et du deuxième élément adaptateur (21a, 21b) sur la structure porteuse,
- l'application (1007) de la charge statique et/ou cyclique par le dispositif d'excitation (30a,b, 30'a,b) sur la première et/ou la deuxième pale de rotor (108) ou sur le premier et/ou le deuxième segment de pale de rotor (108').

11. Procédé selon la revendication précédente,
- **caractérisé en ce que** le premier et/ou le deuxième segment de pale de rotor comprend une plage de 30 % à 99 %, de préférence une plage d'au moins 60 % ou d'au moins 80 %, de la longueur totale de la pale de rotor, en particulier à partir de la racine de pale, et/ou
- **caractérisé en ce que** la première et la deuxième pale de rotor ou le premier et le deuxième segment de pale de rotor sont sensiblement de forme identique, et/ou
- **caractérisé par** l'application synchrone d'une charge cyclique sur la première et la deuxième pale de rotor ou le premier et le deuxième segment de pale de rotor.

12. Procédé (2000) de test d'une pale de rotor (108) et/ou d'un segment de pale de rotor pour une éolienne (100),
**caractérisé par** :
- la mise à disposition d'un dispositif de test selon l'une quelconque des revendications précédentes 1 à 9,
- la fixation (2001) d'une première pale de rotor (108) ou d'un premier segment de pale de rotor (108') sur le premier élément adaptateur (21a),
- la disposition (2002) du premier élément adaptateur (21a) sur la structure porteuse,
- l'application de la charge statique et/ou cyclique (2004) par le dispositif d'excitation (30a,b, 30'a,b) sur la première pale de rotor (108) ou le premier segment de pale de rotor (108').

13. Procédé selon la revendication précédente,
- **caractérisé en ce que** le premier segment de pale de rotor couvre une plage de 30 % à 99 %, de préférence une plage d'au moins 60 % ou d'au moins 80 %, de la longueur totale de la pale de rotor, en particulier à partir de la racine de pale, et/ou
- **caractérisé par** la disposition d'un contre-élément (2003), en particulier sous forme d'un oscillateur monomasse, réglable de préférence sur la fréquence propre de la première pale de rotor ou du premier segment de pale de rotor, sur le deuxième élément adaptateur.

14. Procédé selon au moins l'une quelconque des revendications précédentes 10 à 13, comprenant :
- le transport (1001) d'un dispositif de test (20, 20', 210) selon au moins l'une quelconque des revendications précédentes 1 à 9 vers le lieu de test, de préférence sous une forme démontée, et/ou
- la mise à disposition d'une fondation (1) sur le site de test, et/ou
- le montage (1002) du dispositif de test (20, 20', 210) sur le lieu de test.

15. Utilisation d'un dispositif de test (20, 20', 210) selon au moins l'une quelconque des revendications précédentes 1 à 9 pour tester une pale de rotor (108) et/ou un segment de pale de rotor (108') pour une éolienne (100) et/ou pour tester simultanément deux pales de rotor (108) et/ou deux segments de pale de rotor (108') pour une éolienne (100).
